(19) Europäisches Patentamt
European Patent Office
Office européen des brevets

(11) **EP 2 490 131 A1**

(12) **EUROPEAN PATENT APPLICATION**
published in accordance with Art. 153(4) EPC

(43) Date of publication:
**22.08.2012 Bulletin 2012/34**

(51) Int Cl.:
***G06F 17/30*** *(2006.01)*

(21) Application number: **10823012.9**

(86) International application number:
**PCT/CN2010/074535**

(22) Date of filing: **25.06.2010**

(87) International publication number:
**WO 2011/044780 (21.04.2011 Gazette 2011/16)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **13.10.2009 CN 200910175762**

(71) Applicant: **Tencent Technology (Shenzhen)
Company Limited
Shenzhen
Guangdon 518044 (CN)**

(72) Inventors:
• **YANG, Haisong
Guangdong 518044 (CN)**
• **SUN, Liang
Guangdong 518044 (CN)**

(74) Representative: **Isarpatent
Patent- und Rechtsanwälte
Friedrichstrasse 31
80801 München (DE)**

(54) **SEARCH ENGINE SYSTEM AND INFORMATION SEARCHING METHOD**

(57) The invention provides a search engine system and an information searching method. The system includes a search module, an entrance for data submission by data providers, a resource library and a payment module; wherein the search module is configured to receive an information search request, search for corresponding data information from the resource library, send a payment request to the payment module after receiving a request for viewing the data information, and display or output the data information which is requested to view after receiving an indication of successful payment sent from the payment module; the entrance for data submission by data providers, which is connected with the resource library, is used for the specialized data providers to submit data information to the resource library; the resource library is configured to receive and store data information; the payment module is configured to receive the payment request sent from the search module, check corresponding account according to account information carrying in the payment request and deduct fee corresponding to the data information which is requested to view from the account, and send the indication of successful payment to the search module after the deduction is successful. Adoption of the present invention can search more comprehensive data information for web users while saving web resources.

Fig. 1

**Description**

**Field of the invention**

The present invention relates to internet technology, and more particularly, to a search engine system and an information searching method.

**Background art**

A typical search engine system usually includes a search module, a ranking module and a display module.
The search module is configured to receive information search requests, and search for data information relevant to the information search requests from the open data on the internet and send the searched data information to the ranking module.
The ranking module is configured to rank the data information sent from the search module and send the ranked results and the data information to the display module.
The display module is configured to directly display the data information or links to the data information sent from the ranking module.
The open data on the internet refers to the data information such as web pages freely available to the public. In other words, any one has the authority to access to the open data.
In addition to the open data, actually, there is a lot of deep web data on the internet. The deep web data refers to web that the typical search engines can not capture or information that the typical search engines cannot search, i.e. the data on "invisible" websites. The "invisible" websites can be divided into two types: one type is that websites themselves are nonstandard or that the internet itself lacks a uniform standard, which causes the web crawler of the search engine unable to identify and grab contents of these websites, and the other type is that websites themselves use specific techniques to prevent search engines from searching data information on them in order to protect intellectual properties, individual privacy or other contents, such as websites of specialized data providers.
The website of a specialized data provider refers to a website which possesses data resource of specifical areas or special types and which provides data services on a for-profit basis, such as Wanfang digital database and ACM digital library. To acquire the detailed data information on these websites, users have to register respectively in corresponding websites and pay in one lump sum for a certain authority to obtain certain authority and then obtain corresponding detailed data information through logging in the corresponding websites.
At present, there are a large number of such websites of the specialized data providers on the internet, in which the information contained is significant and is also of great value to many search engine users. However, on the one hand, the typical search engines cannot grasp the detailed data on the websites of the specialized data providers, and cannot thus be able to provide users with complete data information, and on the other hand, even though summaries of data information may be searched by the search engine, the user can determine detailed data information needed to be obtained according to the summaries, and the user can obtain the detailed data information only after a series of operations including logging in the corresponding website, registering and paying and so on; and this is extremely inconvenient for web users. Meanwhile, frequent operations such as logging in, registering and paying also take up a large amount of web resources.

**Summary**

In view of this, an object of one embodiment of the present invention is to present a search engine system and an information searching method, which can search more comprehensive data information for web users while saving web resources.
In order to achieve the aforementioned object, the technical solution of the one embodiment of the present invention is specifically implemented as following:
A search engine system, which includes a search module, an entrance for data submission by data providers, a resource library and a payment module;
the search module is configured to receive an information search request, find out corresponding data information from the resource library according to the information search request, send a payment request to the payment module after receiving a request to view the data information, and display or output the data which is requested to view after receiving an indication of successful payment sent from the payment module;
the entrance for data submission by data providers, which is connected with the resource library, is used for the specialized data providers to submit data information to the resource library;
the resource library is configured to receive and store data information submitted by the specialized data providers;
the payment module is configured to receive the payment request sent from the search module, check corresponding account according to account information carrying in the payment request and deduct fee corresponding to the data information which is requested to view from the account, and send the indication of successful payment to the search module after the deduction is successful.

An information searching method comprises:

establishing a first entrance for data providers to submit data information;

receiving and storing the data information submitted by the data providers via the first entrance;

receiving an information search request, searching for corresponding information from the stored data information according to the information search request, receiving a request to view the information, and displaying or outputting the information which is requested to view after payment has been made for the information.

It can be seen, the search engine system of the present invention receives data information submitted by specialized data providers via an entrance set for the data providers and stores the data information submitted by specialized data providers by setting up a specific resource library; through searching the data information of the resource library, the search engine system can find the data information which is invisible to traditional search engine technology, so that the search engine system can search more comprehensive information.

On the other hand, by the presence of the payment module, the users can pay to all specialized data providers that submit data to the search engine system for the information which is requested to view via the payment module, thus eliminating the need to frequently logging in to the different websites of different specialized data providers.

This not only provides convenience to users but also saves web resources.

### Brief description of the drawings

Fig. 1 is a schematic diagram of a first layout of a search engine system provided by the present invention.

Fig. 2 is a schematic diagram of a second layout of the search engine system provided by the present invention.

Fig. 3 is a schematic diagram of a detailed layout of the search engine system of the present invention.

Fig. 4 is a flow chart of an information searching method provided by the present invention.

Fig. 5 is a flow chart of a method using the present invention to submit data information to the search engine system.

Fig. 6 is a flow chart of a method using the present invention to search for data information.

### Detailed description of examples

In order to make objects, technical solutions and advantages of the present invention clear, the present invention is hereinafter further explained in details with reference to embodiments and drawings.

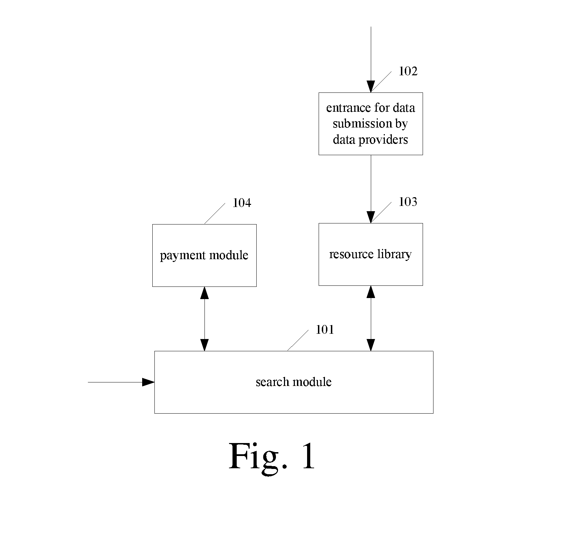

Fig. 1 is a schematic diagram of a first layout of a search engine system provided by the present invention. As shown in Fig. 1, the system includes a search module 101, an entrance for data submission by data providers 102, a resource library 103 and a payment module 104.

The search module 101 is configured to receive an information search request, search for corresponding data information from the resource library 103 according to the information search request, send a payment request to the payment module 104 after receiving a request to view the data information, and display or output the data which is requested to view after receiving an indication of successful payment sent from the payment module 104.

The entrance for data submission by data providers 102 is connected with the resource library 103 and is used for specialized data providers to submit data information to the resource library 103.

The resource library 103 is configured to receive and store data information submitted by the specialized data providers.

The payment module 104 is configured to receive the payment request sent from the search module 101, check a corresponding account according to account information carrying in the payment request and deduct the corresponding fees for the data information which is requested to view from the account, and send the indication of successful payment to the search module 101 after the deduction is successful.

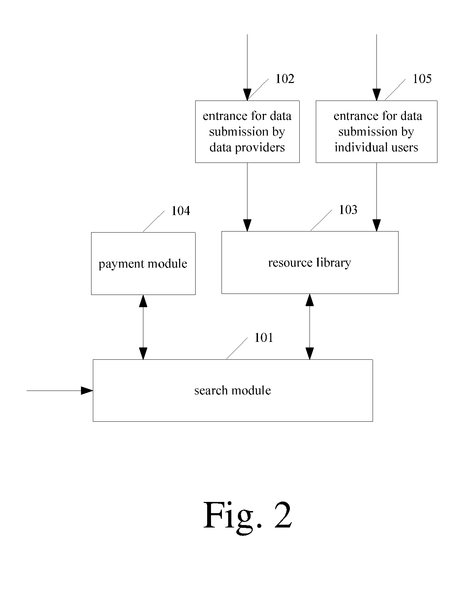

Fig. 2 is a schematic diagram of a second layout of the search engine system provided by the present invention. As shown in Fig. 2, on the basis of the system shown in Fig. 1, the system further includes an entrance for data submission by individual users 105.

The entrance for data submission by individual users 105 is connected with the resource library 103 and is used for the individual users to submit data information to the resource library 103.

The resource library 103 is further configured to receive and store data information submitted by the individual users.

By the presence of the entrance for data submission by individual users 105, any web user can submit data to the resource library 103 through the entrance for data submission by individual users 105, so that the search engine system can search more comprehensive data information.

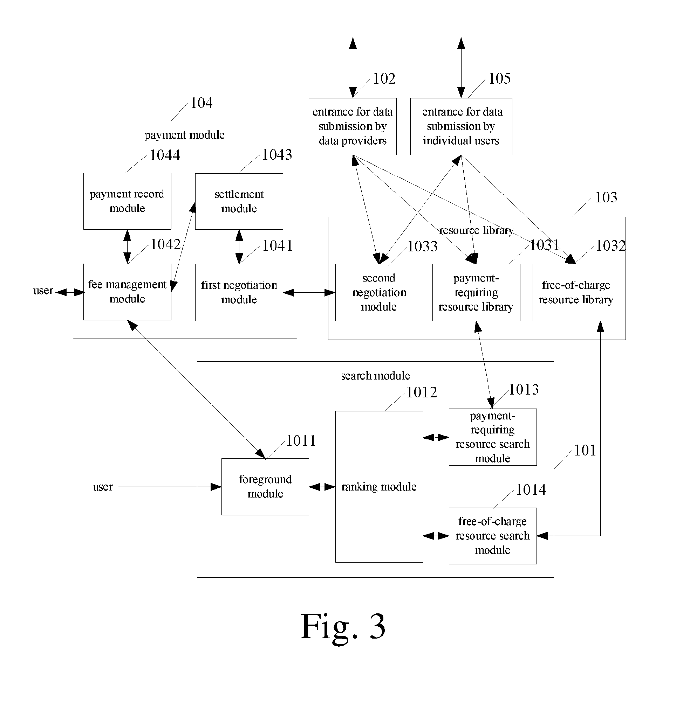

In the specific implementation of the search engine system shown in Fig. 2, any one or more of the search module 101, the resource library 103 and the payment module 104 can be further detailed. The specific implementation of the search engine system is illustrated in the following with each of the search module 101, the resource library 103 and the payment module 104 being detailed, and the details are shown in Fig. 3.

Fig. 3 is a schematic diagram of a detailed layout of the search engine system of the present invention. The system as shown in Fig. 3 shows details of each modules of the system shown in Fig. 2, which specifically include:

the resource library 103 includes a payment-requiring resource library 1031, a free-of-charge resource library 1032 and a second negotiation module 1033; the search module 101 includes a foreground module 1011, a ranking module 1012, a payment-requiring resource search module 1013 and a free-of-charge resource search module 1014; the payment module 104 includes a first negotiation module 1041, a fee management module 1042, a settlement module 1043 and a payment record module 1044.

The payment-requiring resource library 1031 is configured to receive and store data information that is submitted by individual users or specialized data providers and that requires payment to view.

The free-of-charge resource library 1032 is configured to receive and store data that is submitted by individual users or specialized data providers and that does not require payment to view.

The foreground module 1011 is configured to receive an information search request, send a search command to the payment-requiring resource search module 1013 or the free-of-charge resource search module 1014 according to the information search request, send a ranking command to the ranking module 1012 and receive data information sent from the ranking module 1012, display the summary of the data information, send a payment request to the payment module 104 after receiving a request to view the payment-requiring data information, and display or output the data information or link(s) to the data information which is requested to view after receiving an indication of successful payment sent from the payment module 104.

The ranking module 1012 is configured to receive data information sent from the payment-requiring resource search module 1013 and/or the free-of-charge resource search module 1014, rank the received data information according to the ranking command sent from the foreground module 1011, and send the ranked data information to the foreground module 1011.

The payment-requiring resource search module 1013 is configured to search corresponding charged data information from the payment-requiring resource library 1031 and sent it to the ranking module 1012 after receiving the search command sent from the foreground module 1011.

The free-of-charge resource search module 1014 is configured to search corresponding free-of-charge data information from the free-of-charge resource library 1032 and send it the ranking module 1012 after receiving the search command from the foreground module 1011.

The first negotiation module 1041 is configured to receive revenue-sharing agreement sent from the second negotiation module 1033 and send an acknowledgement indication to the second negotiation module 1033.

The second negotiation module 1033 is configured to negotiate the revenue-sharing agreement with individual users or data providers via the entrance for data submission by individual users 105 or the entrance for data submission by data providers 102, send the revenue-sharing agreement to the first negotiation module 1041 after receiving a trigger indicating approvement of the revenue-sharing agreement, and display or output an acknowledgement information via the entrance for data submission by individual users 105 or the entrance for data submission by data providers 102 after receiving the acknowledgement indication from the first negotiation module 1041.

After receiving the payment request sent from the search module 101, the fee management module 1042 checks whether the balance of the account corresponding to the payment request is greater than the amount of fee corresponding to the payment request, deducts the corresponding fee from the account if the balance is enough to cover the fee, and then sends the indication of successful payment to the search module 101.

The settlement module 1043, which is connected with the first negotiation module 1041 and the fee management module 1042, is configured to obtain information on the fees deducted by the fee management module 1042, the data information for which the fees are paid, information of the individual users or data providers who submit the data resource corresponding to the data information and the revenue-sharing agreement stored by the first negotiation module 1041, and settle revenues for the accounts corresponding to information of the individual user or the data provider according to the revenue-sharing agreement as well as the amounts of the fees concerned.

After receiving the payment request sent from the search module 101, the fee management module 1042 inquires about the successively paid data resource information recorded in the payment record module 1044, if it is determined that corresponding account does not pay for the data information which is requested to view, deducts the fee corresponding to the data information which is requested to view, and sends the indication of successful payment to the search module 101 after the corresponding account has paid for the data information which is requested to view.

The payment record module 1044 is configured to record the successively paid data resource information by the fee management module 1042 as well as the corresponding account information.

In order to improve the security of data resource (i.e., data information) submitted by individual users or specialized data providers, the resource library 103 can be further configured to check the validity of received data resource and store the data resource after the validity check is successful. The validity check can be done using either existing techniques or other methods and the present does not limit this.

In the above system, data submitted by individual users and/or specialized data providers includes textual data, audio and/or video data containing descriptive information or valid links directing to the said textual data or audio and/or video data. Depending on the difference of the type and/or volume of the data submitted, the search system can provide different web resources such as network bandwidth for entrance for data submission by individual users and/or data providers, for example, providing broad bandwidth for the submitted video data, or broad bandwidth and storage space for specialized data providers who submit large amounts of data.

The payment module 104 in the above system can also include a module for account recharging, transfer or money withdrawing. The resource library 103 can also include a module for individual users or specialized data providers to update and/or delete data information submitted to the resource library 103. The ranking module 1012 can adopt different algorithms to calculate relevance for the charged resource and the free of charge resource. The fee management module 1042 can be configured to remind users to recharge their accounts before accessing when the balances of the accounts are not enough.

Further, the present invention also uses a particular ranking method to rank data information including both of the charged resource and the free of charger resource, to allow data information of greater value to users to be displayed at front position of all the searched data information.

Specifically, the ranking module 1012 acquires weights assigned in advance for the relevance between charged resources and information search requests, and the numbers of clicks on the charged resources and comments, then weights the charged resources according to the weights, the actual relevance between the charged resources and the information search request, and the actual numbers of clicks on the charged resources and comments, and ranks the charged resources based on the weighted results.

The ranking module 1012 can further include a module configured to judge whether the actual relevance between the charged resources and the information search request is greater than a predetermined value, and ranking the charged resources only when the actual relevance between the charged resources and the information search request is greater is greater than the predetermined value.

The ranking module 1012 can also rank the charged resources, which are ranked before a predetermined position of all the charged resources, before all the free of charge resource.

The following will make a detailed explanation about the ranking method of the ranking module 1012.

The ranking module 1012 can mixed ranks charged resources and free of charge resources. Different ranking weights (i.e. ranking factor) can be set for the charged resources and the free of charge resources, and weighted results of the charged resources and the free of charge resources can be calculated, respectively, and the charged resources and the free of charge resources can be mixed ranking based on the weighted results.

Preferably, the weighted results for the charged resources can be obtained through the following formula:

$$\text{Rank}_{\text{charged fee}} = P1 \times \text{Rank}_{\text{Clicks}} + P2 \times \text{Rank}_{\text{Comments}} + P3 \times \text{Rank}_{\text{Relevance}}$$

wherein, $\text{Rank}_{\text{charged fee}}$ is the weighted result; P1, P2 and P3 are the weights for the number of users' clicks, rating of comments on the charged resources and the relevance between the charged resources, respectively, and the information search request; and P1+P2+P3 =1.

$\text{Rank}_{\text{Clicks}}$ is a ranking value calculated based on the number of clicks on the charged resources by users. The more users click on the charged resources, the higher the Rank clicks of the charged resources will be.

Rank Comments is a ranking value calculated based on the rating of actual comments of the charged resources of users. The higher the rating of the comments of the charged resources of users is, the higher the Rank Comment of the charged resources will be.

Rank Relevance is a ranking value calculated based on the actual relevance between the charged resources and the information search request, the higher the relevance between the two, the higher the Rank Relevance of the charged resources will be.

According to above calculation method, every search result from the payment-requiring resource search module has a weighted result. We pick the first N highest weighted results out and place them in front of the search results from other data search modules. N can be any natural number, e.g. 3.

In order to screen out charged resources with too low relevance, a threshold can be set for the Rank Relevance of the charged resources. If the Rank Relevance is lower than the pre-set threshold, the corresponding charged resources will not be displayed. This not only prevents irrelevant charged data from disturbing users, but can also ensure that the first N pertinent charged resources can be displayed at the top for the user to choose.

The payment module 104 allows deduction of small amounts of money from users' accounts, i.e., the amount of the money each deducted from the account of the user can be smaller, e.g. 0.5 RMB each time.

In short, the search engine system provided by the present invention allows any user or a third-party data provider to submit valuable resources to the search engine, and the search engine will display some of the resources to other users who are searching based on factors such as relevance. If the users who are searching are willing to pay for these resources, they can just click on these resources and obtain these resources from the search engine after payment is made through the background payment module.

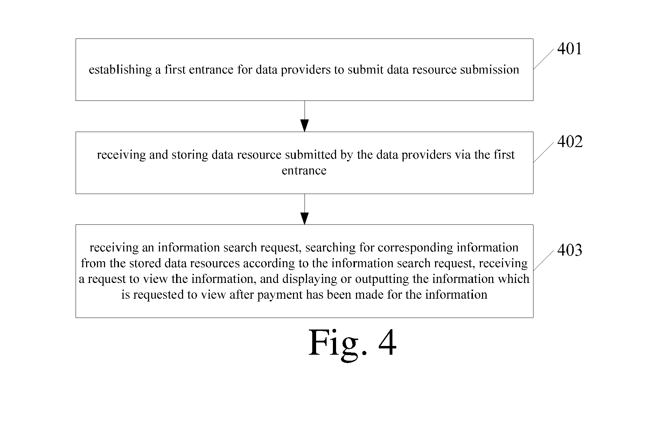

Referring to Fig. 4, the present invention provides an information searching method corresponding to the search engine system described above.

Fig. 4 is a flow chart of an information searching method provided in the present invention. As shown in Fig. 4, the method includes:

Step 401: establishing a first entrance for data providers to submit data resource submission.

Step 402: receiving and storing data resource submitted by the data providers via the first entrance.

Step 403: receiving an information search request, searching for corresponding information from the stored data resources according to the information search request, receiving a request to view the information, and displaying or outputting the information which is requested to view after payment has been made for the information.

The method can further include: establishing a second entrance for individual users to submit data resource, and receiving and storing data resource submitted by the individual users via the second entrance.

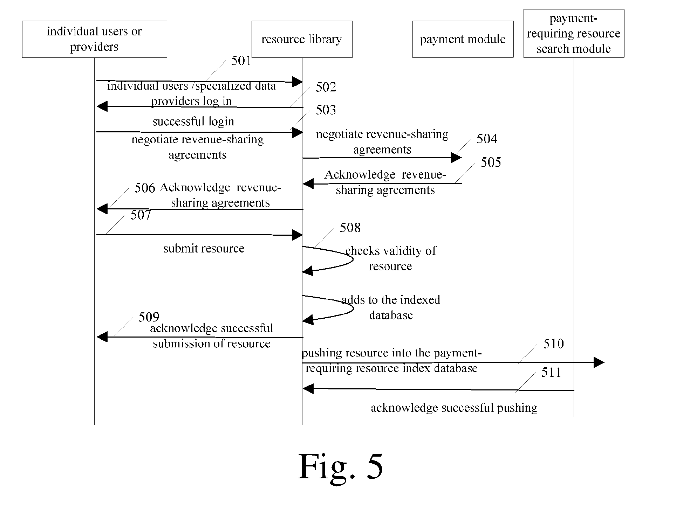

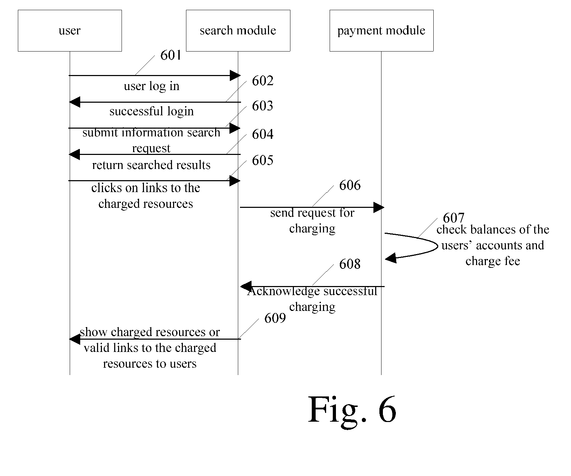

The following will describe a method of using the present invention to submit data information to the search engine system and using the present invention to search data information, the detailed are shown in Fig. 5 and Fig. 6.

Fig. 5 is a flow chart of a method of using the present invention to submit data information to the search engine system. As shown in Fig. 5, the method includes:

Steps 501-502: individual users or specialized data providers log in the resource library via the corresponding entrances for data submission.

Steps 503-506: individual users or specialized data providers negotiate revenue-sharing agreements with the resource library via the corresponding entrances for data submission, the resource library sends the agreed revenue-sharing agreements to the payment module, and the payment module sends a message acknowledging the agreements to the individual users or specialized data providers via the resource library after receiving the revenue-sharing agreements,

Step 507: individual users or specialized data providers submit data information to the resource library via the corresponding entrances for data submission.

Step 508: the resource library receives and checks validity of data resource information, and adds the data resource information to the indexed database in the resource library after the validity check is successful.

Step 509: the resource library sends a message of acknowledging successful submission of resource to individual users or specialized data providers via the corresponding entrances for data submission.

Steps 510-511: the resource library sends a request to the payment-requiring resource search module to push the resource submitted by individual users or specialized data providers into the payment-requiring resource index database in the payment-requiring resource search module; the payment-requiring resource search module sends a message of acknowledging successful pushing to the resource library after pushing the submitted resource into the payment-requiring resource index database.

Fig. 6 is a flow chart of a method of using the present invention to search for data information. As shown in Fig. 6, the method includes:

Steps 601-602: search engine users log in the search module.

Steps 603-604: the search engine users submit an information search request to the search engine system and the search module returns the searched results to the search engine users.

Steps 605-608: the search module receives the search engine users' clicks on the links to the charged resources and sends a request for charging corresponding to the charged resource to the payment module; the payment module checks whether the balances of the users' accounts is enough, the fee is deducted if the balances are enough, and sends a message indicating that payment has been made to the search module.

Step 609: the search module shows charged resources or valid links to the charged resources to the search engine users.

The foregoing are only preferred embodiments of the invention and are not for use in limiting the protection scope thereof. All modifications, equivalent replacements or improvements in accordance with the spirit and principles of the invention shall be included in the protection scope of the invention.

**Claims**

1. A search engine system comprising: a search module, an entrance for data submission by data providers, a resource library and a payment module;
   wherein the search module is configured to receive an information search request, search for corresponding data information from the resource library according to the information search request, send a payment request to the payment module after receiving a request for viewing the data information, and display or output the data information which is requested to view after receiving an indication of successful payment sent from the payment module;
   the entrance for data submission by data providers, which is connected with the resource library, is configured to the specialized data providers to submit data information to the resource library;
   the resource library is configured to receive and store data information submitted by the specialized data providers;
   the payment module is configured to receive the payment request sent from the search module, check corresponding account according to account information carrying in the payment request and deduct fee corresponding to the data information which is requested to view from the account, and send the indication of successful payment to the search module after the deduction is successful.

2. The system according to claim 1, further comprising an entrance for data submission by individual users, which is connected with the resource library and configured to the individual users to submit data information to the resource library;
   wherein the resource library is configured to receive and store the data information submitted by the individual users.

3. The system according to claim 2, wherein the resource library comprises a payment-requiring resource library and a free-of-charge resource library; the search module comprises a foreground module, a ranking module, a payment-requiring resource search module and a free-of-charge resource search module;
   wherein the payment-requiring resource library is configured to receive and store payment-requiring data information submitted by the individual users or the specialized data providers;
   the free-of-charge resource library is configured to receive and store free-of-charge data information submitted by the individual users or the specialized data providers;
   the foreground module is configured to receive the information search request, send a search command to the payment-requiring resource search module or the free-of-charge resource search module according to the information search request, send a ranking command to the ranking module, receive data information sent from the ranking module, display summary of the data information, send a payment request to the payment module after receiving a request to view the payment-requiring data, and display or output the data information or link to the data information which is requested to view after receiving the indication of successful payment sent from the payment module;
   the ranking module is configured to receive data information sent from the payment-requiring resource search module and/or the free-of-charge resource search module, rank the received data information according to the ranking command sent from the foreground module, and send the ranked data information to the foreground module;
   the payment-requiring resource search module is configured to search for corresponding payment-requiring data information from the payment-requiring resource library after receiving the search command sent from the foreground module and send the searched corresponding payment-requiring data information to the ranking module;
   the free-of-charge resource search module is configured to search for corresponding free-of-charge data information from the free-of-charge resource library after receiving the search command sent from the foreground module and send the searched corresponding free-of-charge data information to the ranking module.

4. The system according to claim 2, wherein the payment module comprises a first negotiation module, a fee management module and a settlement module; the resource library further comprises a second negotiation module;
   wherein the first negotiation module is configured to receive a revenue-sharing agreement sent from the second negotiation module and send an acknowledgement indication to the second negotiation module;

the second negotiation module is configured to negotiate the revenue-sharing agreement with the individual users or the data providers via the entrance for data submission by the individual users or data providers, send the revenue-sharing agreement to the first negotiation module after receiving a trigger indicating approvement of the revenue-sharing agreement, and display or output an acknowledgement information via the entrance for data submission by the individual users or data providers after receiving the acknowledgement indication sent from the first negotiation module;

after receiving the payment request from the search module, the fee management module checks whether balance of the account corresponding to the payment request is greater than amount of the fee, deducts the fee from the account if the balance is enough to cover the fee and then sends the indication of successful payment to the search module;

the settlement module, which is connected with the first negotiation module and the fee management module, is configured to obtain information on the fees deducted by the fee management module, the data information for which the fees are paid, information of the individual users or data providers who submit the data resource corresponding to the data information and the revenue-sharing agreement stored by the first negotiation module, and settle revenues for the accounts corresponding to information of the individual user or the data provider according to the revenue-sharing agreement as well as the amounts of the fees concerned.

5. The system according to claim 4, wherein the payment module further comprises a payment record module; wherein the fee management module receives the payment request sent from the search module; according to the account information carrying in the payment request, the fee management module inquires about successively paid data resource information recorded in the payment record module, if it is determined that corresponding account does not pay for the data information which is requested to view, deducts the fee corresponding to the data information which is requested to view, and sends the indication of successful payment to the search module after the corresponding account has paid for the data information which is requested to view;

the payment record module is configured to record the successively paid data resource information by the fee management module as well as the corresponding account information.

6. The system according to claim 2, wherein the resource library is configured to receive and checks validity of data information submitted by the individual users or specialized data providers, and store the data information after the validity check is successful.

7. The system according to claim 6, wherein the data information includes textual data, audio and/or video data containing descriptive information or valid links directing to the textual data or audio and/or video data.

8. The system according to claim 3, wherein the ranking module acquires weights assigned in advance for the relevance between payment-requiring resources and the information search request, and the numbers of clicks on the payment-requiring resources and comments, then weights the payment-requiring resources according to the weights, the actual relevance between the payment-requiring and the information search request, and the actual numbers of clicks on the payment-requiring resources and comments, and ranks the payment-requiring resources based on the weighted results.

9. The system according to claim 8, wherein the ranking module further comprises a module configured to judge whether the actual relevance between the payment-requiring resources and the information search request is greater than a predetermined value, and ranking the payment-requiring resources only when the actual relevance between the payment-requiring resources and the information search request is greater is greater than the predetermined value.

10. The system according to claim 8 or 9, wherein the ranking module ranks payment-requiring resources, which are ranked before a pre-determined position of all the payment-requiring resources, before all the free of charge resource.

11. An information searching method comprises:

establishing a first entrance for data providers to submit data information;
receiving and storing the data information submitted by the data providers via the first entrance;
receiving an information search request, searching for corresponding information from the stored data information according to the information search request, receiving a request to view the information, and displaying or outputting the information which is requested to view after payment has been made for the information.

**12.** The method according to claim 11, further comprising:

establishing a second entrance for individual users to submit data information;
receiving and storing the data information submitted by the individual users via the second entrance.

102

entrance for data
submission by
data providers

104

payment module

103

resource library

101

search module

# Fig. 1

Fig. 2

Fig. 3

establishing a first entrance for data providers to submit data resource submission ⟋401

receiving and storing data resource submitted by the data providers via the first entrance ⟋402

receiving an information search request, searching for corresponding information from the stored data resources according to the information search request, receiving a request to view the information, and displaying or outputting the information which is requested to view after payment has been made for the information ⟋403

Fig. 4

Fig. 5

Fig. 6

# INTERNATIONAL SEARCH REPORT

| International application No. |
| --- |
| PCT/CN2010/074535 |

**A. CLASSIFICATION OF SUBJECT MATTER**

G06F17/30(2006.01)i

According to International Patent Classification (IPC) or to both national classification and IPC

**B. FIELDS SEARCHED**

Minimum documentation searched (classification system followed by classification symbols)

IPC: G06F17/-, G06Q

Documentation searched other than minimum documentation to the extent that such documents are included in the fields searched

Electronic data base consulted during the international search (name of data base and, where practicable, search terms used)

CNPAT,CNKI,WPI,EPODOC: search+, database?, pay+, charge?, money, expense?, fee?, account?, user?, request?, free w database, charged w database

**C. DOCUMENTS CONSIDERED TO BE RELEVANT**

| Category* | Citation of document, with indication, where appropriate, of the relevant passages | Relevant to claim No. |
| --- | --- | --- |
| X | CN 101271557 A(MAQI YANG) 24 Sep. 2008 (24.09.2008) description page 6 line 19 to page 10 line 23, and claims 1-10 | 1-2,6-7,11-12 |
| A | | 3-5,8-10 |
| A | CN 1430751 A(OFTULL SERVICE INC) 16 Jul. 2003 (16.07.2003) See the whole document | 1-12 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 Sep. 2010(21.09.2010) | **30 Sep. 2010 (30.09.2010)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>LI, Ning<br>Telephone No. (86-10)62411750 |
| --- | --- |

Form PCT/ISA /210 (second sheet) (July 2009)

<table>
<tr><td colspan="2" align="center">**INTERNATIONAL SEARCH REPORT**<br>Information on patent family members</td><td colspan="2">International application No.<br><br>*PCT/CN2010/074535*</td></tr>
<tr><td align="center">Patent Documents referred<br>in the Report</td><td align="center">Publication Date</td><td align="center">Patent Family</td><td align="center">Publication Date</td></tr>
<tr><td align="center">CN 101271557 A</td><td align="center">24.09.2008</td><td align="center">NONE</td><td></td></tr>
<tr><td align="center">CN 1430751 A</td><td align="center">16.07.2003</td><td align="center">WO 0190947 A1</td><td align="center">29.11.2001</td></tr>
<tr><td></td><td></td><td align="center">AU 6327501 A</td><td align="center">03.12.2001</td></tr>
<tr><td></td><td></td><td align="center">EP 1297453 A1</td><td align="center">02.04.2003</td></tr>
<tr><td></td><td></td><td align="center">KR 20030003739 A</td><td align="center">10.01.2003</td></tr>
<tr><td></td><td></td><td align="center">DE 10196212 T</td><td align="center">21.08.2003</td></tr>
<tr><td></td><td></td><td align="center">GB 2388678 A</td><td align="center">19.11.2003</td></tr>
<tr><td></td><td></td><td align="center">JP 2003534602 T</td><td align="center">18.11.2003</td></tr>
<tr><td></td><td></td><td align="center">GB 2388678 B</td><td align="center">01.12.2004</td></tr>
<tr><td></td><td></td><td align="center">US 6876997 B1</td><td align="center">05.04.2005</td></tr>
<tr><td></td><td></td><td align="center">AU 2001263275 B2</td><td align="center">21.07.2005</td></tr>
<tr><td></td><td></td><td align="center">US 2005240557 A1</td><td align="center">27.10.2005</td></tr>
<tr><td></td><td></td><td align="center">KR 20050071717 A</td><td align="center">07.07.2005</td></tr>
<tr><td></td><td></td><td align="center">AU 2005225097 A1</td><td align="center">10.11.2005</td></tr>
<tr><td></td><td></td><td align="center">JP 3860036 B2</td><td align="center">20.12.2006</td></tr>
<tr><td></td><td></td><td align="center">KR 100699977 B1</td><td align="center">27.03.2007</td></tr>
<tr><td></td><td></td><td align="center">KR 100719009 B1</td><td align="center">10.05.2007</td></tr>
<tr><td></td><td></td><td align="center">AU 2008202363 A1</td><td align="center">19.06.2008</td></tr>
<tr><td></td><td></td><td align="center">US 7657555 B2</td><td align="center">02.02.2010</td></tr>
<tr><td></td><td></td><td align="center">EP 1297453 B1</td><td align="center">21.04.2010</td></tr>
<tr><td></td><td></td><td align="center">US 2010106706 A1</td><td align="center">29.04.2010</td></tr>
<tr><td></td><td></td><td align="center">AT 465470 T</td><td align="center">15.05.2010</td></tr>
<tr><td></td><td></td><td align="center">CA 2409642 A1</td><td align="center">29.11.2001</td></tr>
<tr><td></td><td></td><td align="center">CN 1430751 B</td><td align="center">26.05.2010</td></tr>
</table>

Form PCT/ISA /210 (patent family annex) (July 2009)